# FASCICULE DE BREVET EUROPEEN

(11) **EP 1 338 316 B1**
(45) Date de publication et mention de la délivrance du brevet: **27.10.2004**
(21) Numéro de dépôt: 03290281.9
(22) Date de dépôt: 04.02.2003
(51) Int. Cl.: B01D 1/26, B01D 15/08

(54) **Procédé et dispositif de chromatographie avec récupération de solvant**
Verfahren und Vorrichtung für die Chromatographie und Lösungsmittelrückgewinnung
Method and apparatus for chromatography and solvent recovery

(30) Priorité: 22.02.2002 FR 0202280
(43) Date de publication de la demande: 27.08.2003
(73) Titulaire: NOVASEP, 54340 Pompey (FR)
(72) Inventeur: Hamende, Michel, 1180 Bruxelles (BE); Chatel, Marc, 1160 Bruxelles (BE); Rebier, Laurent, 54000 Nancy (FR); Nicoud, Roger-Marc, Lay-Saint-Christoph (FR)
(74) Mandataire: Cabinet Hirsch

(56) Documents cités:
- DE-B- 1 091 985
- NL-C- 83 916
- US-A- 4 434 027
- US-B1- 6 325 898

## Description

La présente invention concerne un procédé et un dispositif de chromatographie, qui permet une récupération efficace du solvant utilisé.

La chromatographie préparative est utilisée comme procédé de purification de mélanges en particulier pharmaceutiques. Par exemple, les procédés de chromatographie actuels peuvent être schématisés comme la séparation de deux "composants" d'une charge ou mélange à purifier, à l'aide d'un solvant et d'un lit chromatographique, deux fractions étant produites, l'une avec un premier "composant" et l'autre avec un second "composant". Un des deux, et plus rarement les deux, composants est(sont) recherché(s).

La chromatographie classique dite d'élution (ou batch), même lorsqu'elle fait appel à une technologie de colonne efficace est forte consommatrice de solvants. Cette consommation de solvant est un facteur de coût important dont l'impact peut-être minimisé par un recyclage adéquat effectué en général par évaporation [M. Perrut et J.C. Trap, Analysis, vol. 15, n° 8, 1987].

Des mises en oeuvre chromatographiques particulières permettant des opérations continues (notamment à contre-courant) ont été proposées afin de maximiser la productivité et/ou de minimiser la consommation de solvant [R.M. Nicoud and R.E. Majors, LC-GC Europe, December 2000, p. 887 ; O. Ludemann-Hombourger, R.M. Nicoud and M. Bailly, Separation Science and Technology, 35(12), pp. 1829-1862, 2000].

EP-A-563388 décrit l'association de la technique dite SMB (Simulated Moving Bed ou lit mobile simulé) avec un système de recyclage de solvant.

Les techniques décrites ci-dessus permettent de répondre aux productions de tonnages faibles ou moyens. Lorsque les productions atteignent des niveaux élevés (dizaines de tonnes par an pour la séparation d'énantiomères par exemple), il s'avère que la consommation d'énergie nécessaire à l'évaporation devient un facteur de coût important.

L'invention a pour objet de minimiser les coûts associés à la récupération du solvant, et notamment les coûts énergétiques requis pour la séparation des différentes fractions issues de chromatographie.

L'invention a donc pour objet un procédé permettant de minimiser la consommation d'énergie nécessaire à l'évaporation du solvant de ces fractions.

L'invention fournit donc un procédé de séparation par chromatographie produisant au moins deux fractions, dans lequel:
(i) on évapore au moins partiellement le solvant desdites fractions produites;
(ii) on sépare les vapeurs de solvant ainsi produites;
caractérisé en ce que l'étape (i) du procédé est mise en oeuvre, pour au moins une desdites fractions, au moins partiellement avec les vapeurs de solvant séparées provenant d'une des autres fractions évaporées.

Selon un mode de réalisation, deux fractions d'extrait et de raffinat sont évaporées.

Selon un mode de réalisation, l'étape (i) est mise en oeuvre, pour une fraction considérée, totalement avec les vapeurs de solvant séparées provenant d'une des autres fractions évaporées.

Selon un mode de réalisation, une partie des vapeurs de solvant séparées provenant de l'autre fraction évaporée est partiellement recyclée, après évaporation de la fraction considérée, vers l'amont de l'étape (i) d'évaporation de ladite autre fraction.

Selon un mode de réalisation, au moins une des fractions est préchauffée avant évaporation avec les vapeurs de solvant séparées provenant d'une des autres fractions évaporées.

Selon un mode de réalisation, le solvant est recyclé.

L'invention a également pour objet un dispositif pour la mise en oeuvre du procédé selon l'invention.

L'invention a donc encore pour objet un dispositif de chromatographie comprenant:
(i) une unité centrale de séparation sur un lit chromatographique,
(ii) au moins deux lignes de fractions en dérivant,
(iii) au moins deux évaporateurs reliés auxdites lignes de fraction,
(iv) des lignes de fluide caloporteur étant reliées à au moins deux évaporateurs respectivement,
(v) des lignes de soutirage recueillant en aval desdits évaporateurs la fraction évaporée au moins partiellement sous forme d'un mélange liquide+vapeur,
(vi) des séparateurs reliés auxdites lignes de soutirage pour recueillir le solvant dans une ligne,
caractérisé en ce que une ligne recueillant le solvant an aval d'un évaporateur est reliée à une ligne de fluide caloporteur en amont du second évaporateur.

Selon un mode de réalisation, les lignes de fractions correspondent à des fractions d'extrait et de raffinat.

Selon un mode de réalisation, le dispositif comprend de plus un échangeur de chaleur disposé sur une ligne de fraction et relié par ailleurs à une ligne recueillant le solvant en tant que fluide caloporteur.

Selon un mode de réalisation, le dispositif comprend de plus une ligne de recyclage reliant la ligne de solvant et fluide caloporteur quittant un des évaporateurs à la ligne de fraction alimentant l'autre évaporateur, pour un recyclage partiel.

Selon un mode de réalisation, le dispositif comprend en outre un dispositif de recyclage du solvant.

D'autres caractéristiques et avantages de l'invention vont maintenant être décrits en détail dans l'exposé qui suit et qui est donné en référence aux figures annexées dans lesquelles :
- la figure 1 représente schématiquement un dispositif classique.
- la figure 2 représente schématiquement un dispositif selon un premier mode de réalisation de l'invention.
- la figure 3 représente schématiquement un dispositif selon un second mode de réalisation de l'invention.
- la figure 4 représente schématiquement un dispositif selon un troisième mode de réalisation de l'invention.

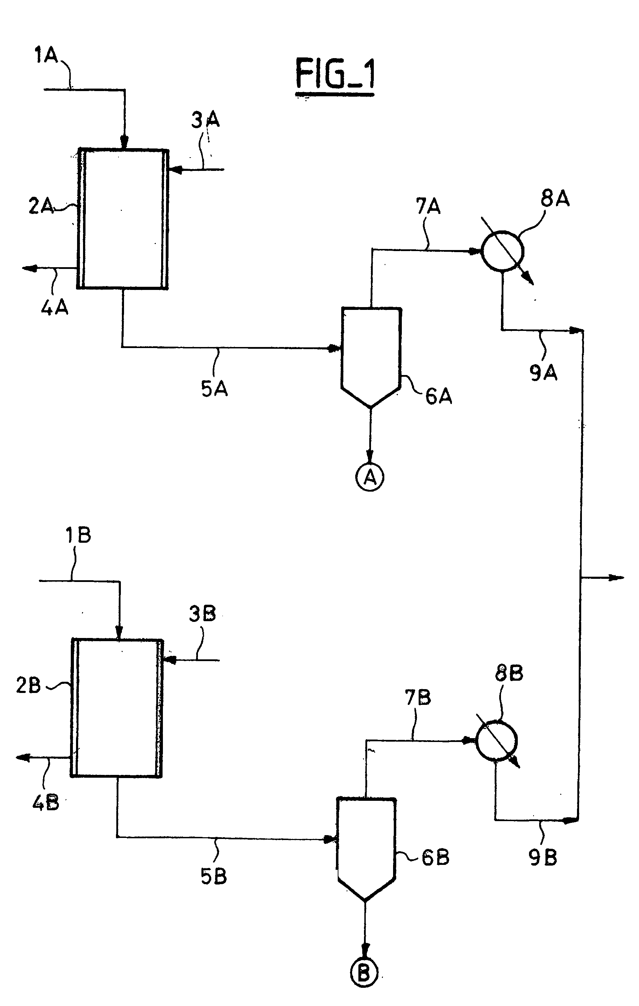

En référence à la figure 1, et à titre d'exemple, on suppose que le produit recherché se trouve dans la fraction A. La fraction A doit normalement impérativement être concentrée car le produit purifié est en général utilisé sous une forme sèche et donc débarrassé du solvant. Le produit ou les produits se trouvant dans la fraction B sont soit détruits, soit recyclés (par exemple après une isomérisation). Il est souhaitable de concentrer la fraction B pour minimiser le volume des rejets et pour pouvoir recycler le solvant. Le procédé selon l'art antérieur, dans lequel on concentre la fraction A pour récupérer produit A et solvant, et dans lequel on sépare la fraction B pour récupérer le solvant (et éventuellement le produit B), comporte les éléments essentiels suivants. Les lignes par exemple d'extrait et de raffinat sont les lignes 1A et 1B, pour les fractions A et B, respectivement. Ces lignes alimentent des évaporateurs 2A et 2B, respectivement, qui sont chauffés par des fluides caloporteurs dans des conduites 3A et 3B, respectivement; les fluides caloporteurs quittent les évaporateurs 2A et 2B, par des conduites 4A et 4B, respectivement. Les fractions sous forme d'un mélange liquide+vapeur quittent les évaporateurs 2A et 2B, par des conduites 5A et 5B, respectivement. Ces conduites alimentent des séparateurs 6A et 6B, dans lesquels les produits A et B sont récupérés en pied (identifiés sur la figure par les lettres A et B entourées) tandis que les vapeurs de solvant sont collectées en tête dans les conduites 7A et 7B, respectivement. Ces conduites 7A et 7B sont reliées à des échangeurs de chaleur 8A et 8B, respectivement. Ces échangeurs 8A et 8B sont refroidis par un fluide de refroidissement de façon classique afin de condenser les solvants. On récupère alors les solvants issus des fractions A et B par les conduites 9A et 9B, respectivement, qui sont ensuite éventuellement combinés pour être recyclés.

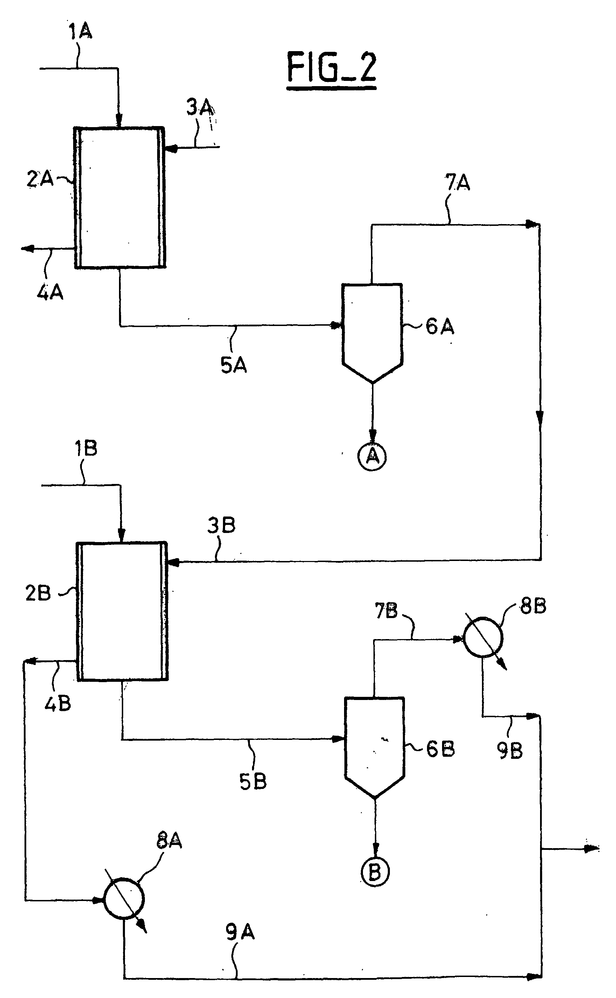

En référence à la figure 2, et à titre d'exemple, on suppose encore que le produit recherché se trouve dans la fraction A. Le procédé selon un premier mode de réalisation comporte les éléments suivants. Les éléments identiques par rapport à la figure 1 ont les mêmes références et ne sont pas décrits à nouveau. La conduite 7A, à la différence de l'art antérieur représenté à la figure 1, n'est pas reliée à un échangeur de chaleur mais à la conduite 3B de l'évaporateur 2B; le solvant (vapeurs) de la ligne 7A est utilisé comme fluide caloporteur dans l'évaporateur 2B. La conduite 4B qui quitte l'évaporateur 2B est reliée à l'échangeur de chaleur 8A. La ligne 7B est reliée classiquement à l'échangeur de chaleur 8B. On récupère alors comme dans l'art antérieur les solvants issus des fractions A et B par les conduites 9A et 9B, respectivement, qui sont ensuite éventuellement combinées pour être recyclées.

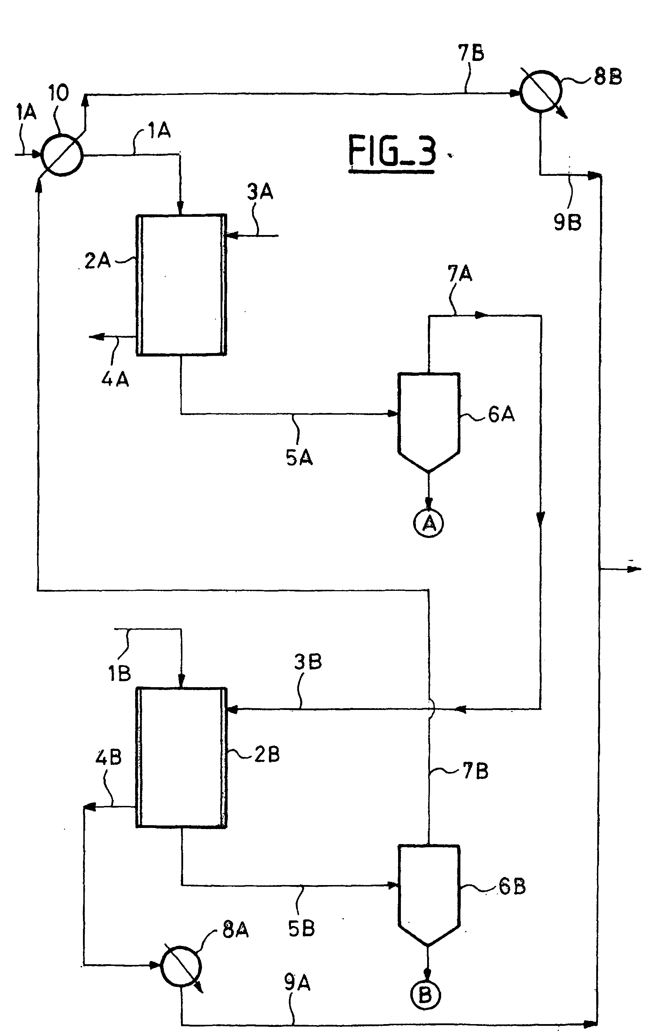

En référence à la figure 3, on utilise un dispositif similaire à celui de la figure 2. Les éléments identiques ont les mêmes références et ne sont pas décrits à nouveau. Selon le mode de réalisation de la figure 3, la ligne 7B de solvant est utilisée pour préchauffer la ligne 1A de la fraction A dans un échangeur 10. La ligne 7B' de solvant issu de la fraction B quitte cet échangeur pour être combiné éventuellement avec le solvant de la ligne 9A ou être envoyée vers l'échangeur 8B de façon classique (seconde variante représentée sur la figure 3).

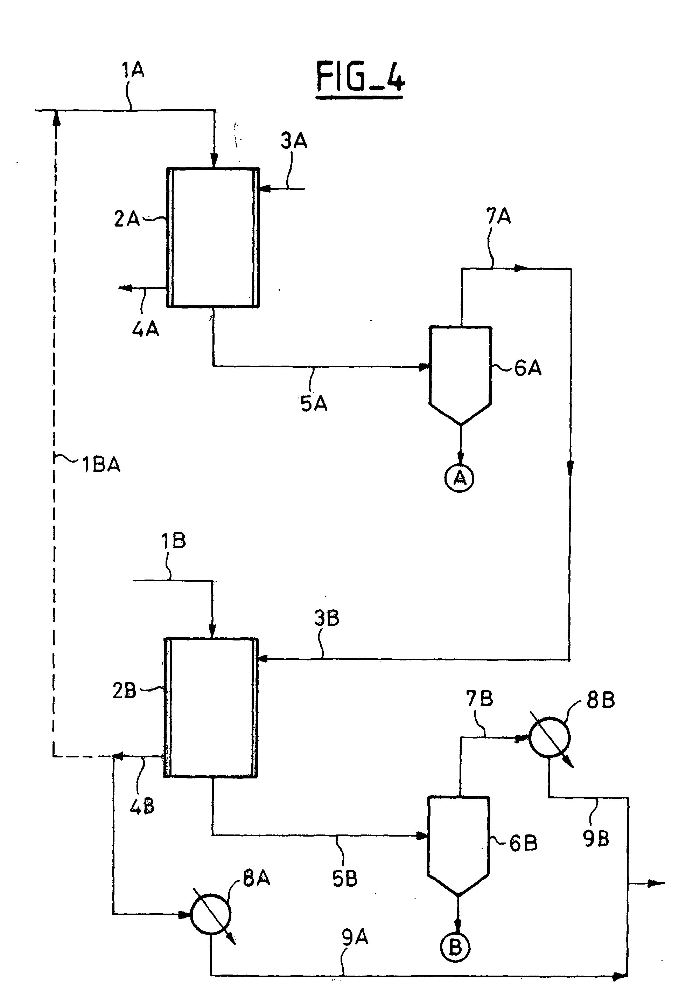

En référence à la figure 4, on utilise un dispositif similaire à celui de la figure 2. Les éléments identiques ont les mêmes références et ne sont pas décrits à nouveau. Selon le mode de réalisation de la figure 4, la ligne 4B de solvant est partiellement recyclée (par la ligne en pointillés 1BA) et mélangée à la ligne 1A alimentant l'évaporateur 2A. Le taux de recyclage est fonction des quantités de chaleur de chaque ligne (par exemple de 10 à 50%, et notamment environ 30%). Cette mise en oeuvre convient lorsque l'on souhaite évaporer la fraction B à l'aide des vapeurs de la fraction A, et lorsque le débit de vapeur provenant de la fraction A n'est pas suffisant pour permettre l'évaporation complète de la fraction B. Ce mode de réalisation se substituerait à celui plus simple qui consiste à inverser les lignes A et B (c'est-à-dire selon un schéma inversé par rapport aux modes de réalisation des figures 2 et 3). Selon le mode de réalisation de la figure 4, il est possible d'utiliser l'évaporateur 2A seul, ce qui peut être utile en période de démarrage (en particulier si la fraction noble est contenue dans la fraction B, et que l'on désire utiliser la fraction B uniquement une fois le système correctement réglé pour éviter les risques de pollution).

Il est aussi avantageux d'appliquer au dispositif de la figure 4 (troisième mode de réalisation) le principe du préchauffage de la figure 3. Dans ce cas, la ligne 7B de solvant est utilisée pour préchauffer la ligne 1A de la fraction A dans un échangeur 10 (disposé entre le point de raccordement des lignes 1BA/1A et l'évaporateur 2A ou avant ledit point de raccordement).

Les évaporateurs utilisés dans l'invention sont des évaporateurs classiques, qui peuvent être à film mince ou à film tombant. Les évaporateurs peuvent être à simple effet ou à multiple effets, certains effets étant alimentés par un fluide caloporteur tandis que d'autres sont alimentés par les vapeurs de l'autre ligne. Ce type d'échangeur est utile lorsque la quantité de chaleur apportée par les vapeurs de solvant n'est pas suffisante pour complètement évaporer le solvant de l'autre fraction.

Les échangeurs (condenseurs) peuvent être regroupés en une seule unité, le cas échéant. Une recirculation forcée des fluides à traiter peut être mise en oeuvre pour augmenter encore les coefficients de transfert thermique au niveau de l'évaporateur.

Il est clair que la taille respective des deux lignes peut varier en fonction des débits à traiter, des facteurs de concentration recherchés ou de contraintes thermiques sur le produit de la fraction recherché.

L'invention trouve à s'appliquer aux procédés et dispositifs de séparation par chromatographie à contre-courant au sens large, et notamment du type SMB précité ou du type VARICOL. Pour mémoire, on rappellera que ce dernier dispositif (et procédé associé) est décrit notamment dans le document WO-A-0025885. Ce document décrit un procédé de séparation d'au moins un composant d'un mélange le contenant, dans un dispositif présentant un ensemble de colonnes chromatographiques ou tronçons de colonnes chromatographiques contenant un adsorbant, montés en série et en boucle, la boucle comportant au moins un point d'une injection de charge, un point d'un soutirage de raffinat, un point d'une injection d'un éluant et un point d'un soutirage d'extrait, dans lequel on détermine entre un point d'injection et un point de soutirage ou vice-versa une zone chromatographique, le procédé étant caractérisé en ce qu'au bout d'une période de temps donné, l'ensemble des points d'injection et de soutirage se trouvent décalés d'un même nombre de colonnes ou tronçons de colonne, avantageusement d'une colonne ou tronçon de colonne, dans une direction donnée définie par rapport à celle de l'écoulement d'un fluide principal circulant à travers la boucle et en ce que, au cours de ladite période, on effectue le décalage des différents points d'injection et de soutirage à des temps différents de manière que la longueur des zones définies par lesdits différents points soit variable.

Les exemples suivants illustrent la présente invention sans toutefois en limiter la portée.

### Exemple 1.

Un système chromatographique de type Lit Mobile Simulé (SMB) est utilisé pour effectuer la séparation de deux isomères. Les deux lignes de sortie sont disponibles à 25°C et ont les caractéristiques suivantes :
- ligne A (ligne d'extrait) : 3200 l/h d'un mélange heptane/éthanol 60/40 contenant un produit à 4 g/l.
- ligne B (ligne de raffinat) : 2200 l/h d'un mélange heptane/éthanol 60/40 contenant un produit à 6 g/l.

En vue de concentrer ces solutions de façon à ce que les produits se retrouvent à une concentration de 150 g/l, on a utilisé trois dispositifs, à savoir le dispositif classique représenté par la figure 1, un dispositif selon l'invention n°1 et un dispositif selon l'invention n°2, correspondant aux dispositifs des figures 2 et 3, respectivement.

Les consommations d'énergie nécessaires à ces opérations sont indiquées dans le tableau suivant.

| Résultats obtenus en fonction du dispositif utilisé en termes de consommation énergétique (kW) | | | |
|---|---|---|---|
| | Energie pour évaporer la ligne B | Energie pour évaporer la ligne A | Total |
| Dispositif classique | 335 | 515 | 850 |
| Dispositif selon l'invention n°1 | 0 | 515 | 515 |
| Dispositif selon l'invention n° 2 | 0 | 440 | 440 |

On constate donc que la quantité d'énergie disponible dans les vapeurs de la ligne A étant supérieure à la quantité nécessaire à l'évaporation de la ligne B, le dispositif selon l'invention n°1 permet de supprimer le besoin en fluide caloporteur pour l'évaporation de la ligne B.

On constate également que le préchauffage du fluide de la ligne A à l'aide des condensats de la ligne B utilisé dans le dispositif selon l'invention n°2 permet encore d'améliorer les résultats en diminuant la quantité d'énergie nécessaire à l'évaporation de la ligne A.

### Exemple 2.

Les conditions décrites à l'exemple 1 sont reprises, mais les deux lignes de sortie ont maintenant les caractéristiques suivantes :
- ligne A (ligne d'extrait) : 2200 l/h d'un mélange heptane/éthanol 60/40 contenant un produit à 4 g/l.
- ligne B (ligne de raffinat) : 3200 l/h d'un mélange heptane/éthanol 60/40 contenant un produit à 6 g/l.

On a utilisé cette fois le dispositif selon l'invention n°3, correspondant au dispositif de la figure 4. Le taux de recyclage est de 30%. On a aussi utilisé le même dispositif intégrant le préchauffage (application au dispositif n°3 du préchauffage selon le dispositif n°2).

Les consommations d'énergie nécessaires à cette opération sont indiquées dans le tableau suivant.

| Résultats obtenus en fonction du dispositif utilisé en termes de consommation énergétique (kW) | | | |
|---|---|---|---|
| | Energie pour évaporer la ligne B | Energie pour évaporer la ligne A | Total |
| Dispositif classique | 515 | 335 | 850 |
| Dispositif selon L'invention n°3 | 0 | 515 | 515 |
| Dispositif selon L'invention n°3 avec préchauffage | 0 | 440 | 440 |

On constate donc que le recyclage partiel du fluide de la ligne 4B dans la ligne 1A permet de supprimer le besoin en fluide caloporteur pour l'évaporation de la ligne B.

## Revendications

1. Procédé de séparation par chromatographie produisant au moins deux fractions, dans lequel:
(i) on évapore au moins partiellement le solvant desdites fractions produites,
(ii) on sépare les vapeurs de solvant ainsi produites,
**caractérisé en ce que** l'étape (i) du procédé est mise en oeuvre, pour au moins une desdites fractions, au moins partiellement avec les vapeurs de solvant séparées provenant d'une des autres fractions évaporées.

2. Procédé selon la revendication 1, **caractérisé en ce que** deux fractions d'extrait et de raffinat sont évaporées.

3. Procédé selon la revendication 1 ou 2, **caractérisé en ce que** l'étape (i) est mise en oeuvre, pour une fraction considérée, totalement avec les vapeurs de solvant séparées provenant d'une des autres fractions évaporées.

4. Procédé selon l'une des revendications 1 à 3, **caractérisé en ce que** une partie des vapeurs de solvant séparées provenant de l'autre fraction évaporée est partiellement recyclée, après évaporation de la fraction considérée, vers l'amont de l'étape (i) d'évaporation de ladite autre fraction.

5. Procédé selon l'une des revendications 1 à 4, **caractérisé en ce que** au moins une des fractions est préchauffée avant évaporation avec les vapeurs de solvant séparées provenant d'une des autres fractions évaporées.

6. Procédé selon l'une des revendications 1 à 5, **caractérisé en ce que** le solvant est recyclé.

7. Procédé selon l'une des revendications 1 à 6, **caractérisé en ce que** la séparation par chromatographie est du type Simulated Moving Bed ou lit mobile simulé.

8. Procédé selon l'une des revendications 1 à 6, **caractérisé en ce que** la séparation par chromatographie est du type VARICOL.

9. Dispositif de chromatographie, adapté à la mise en oeuvre du procédé selon l'une des revendications 1 à 8, comprenant:
(i) une unité centrale de séparation sur un lit chromatographique,
(ii) au moins deux lignes de fractions (1A, 1B) en dérivant,
(iii) au moins deux évaporateurs (2A, 2B) reliés auxdites lignes de fraction,
(iv) des lignes de fluide caloporteur (3A, 3B) étant reliées à au moins deux évaporateurs (2A, 2B) respectivement,
(v) des lignes de soutirage (5A, 5B) recueillant en aval desdits évaporateurs (2A, 2B) la fraction évaporée au moins partiellement sous forme d'un mélange liquide+vapeur,
(vi) des séparateurs (6A, 6B) reliés auxdites lignes de soutirage (5A, 5B) pour recueillir le solvant dans une ligne (7A, 7B),
**caractérisé en ce que** la ligne (7A) est reliée à la ligne (3B) en tant que ligne de fluide caloporteur.

10. Dispositif selon la revendication 9, **caractérisé en ce que** les lignes (1A) et (1B) correspondent à des fractions d'extrait et de raffinat, respectivement.

11. Dispositif selon la revendication 9 ou 10, **caractérisé en ce qu'**il comprend de plus un échangeur de chaleur (10) disposé sur la ligne (1A) et relié par ailleurs à la ligne (7B) en tant que fluide caloporteur.

12. Dispositif selon l'une des revendications 9 à 11, **caractérisé en ce qu'**il comprend de plus une ligne (4B) de solvant et fluide caloporteur quittant l'évaporateur (2B) et une ligne (1BA) reliant ladite ligne (4B) à la ligne (1A) alimentant l'évaporateur (2A), pour un recyclage partiel.

13. Dispositif selon l'une des revendications 9 à 12, **caractérisé en ce que** les évaporateurs sont à simple effet.

14. Dispositif selon l'une des revendications 9 à 12, **caractérisé en ce que** les évaporateurs sont à multiple effets.

15. Dispositif selon l'une des revendications 9 à 14, **caractérisé en ce qu'**il comporte en outre un dispositif de recyclage du solvant.

16. Dispositif selon l'une des revendications 9 à 14, **caractérisé en ce que** l'unité centrale de séparation sur un lit chromatographique est du type Simulated Moving Bed ou lit mobile simulé.

17. Dispositif selon l'une des revendications 9 à 14, **caractérisé en ce que** l'unité centrale de séparation sur un lit chromatographique est du type VARICOL.

## Patentansprüche

1. Chromatographietrennverfahren, bei dem zumindest zwei Fraktionen produziert werden, wobei
(i) das Lösungsmittel der produzierten Fraktionen zumindest teilweise verdampft wird,
(ii) die derart produzierten Lösungsmitteldämpfe abgetrennt werden,
**dadurch gekennzeichnet,**
**dass** die Stufe (i) des Verfahrens für zumindest eine der Fraktionen derart durchgeführt wird, dass die abgetrennten Lösungsmitteldämpfe zumindest teilweise von einer der anderen verdampften Fraktionen stammen.

2. Verfahren nach Anspruch 1, **dadurch gekennzeichnet, dass** zwei extrahierte und raffinierte Fraktionen verdampft werden.

3. Verfahren nach Anspruch 1 oder 2, **dadurch gekennzeichnet, dass** die Stufe (i) für eine der in Betracht stehenden Fraktionen derart durchgeführt wird, dass die abgetrennten Lösungsmitteldämpfe vollständig von einer der anderen verdampften Fraktionen stammen.

4. Verfahren nach einem der Ansprüche 1 bis 3, **dadurch gekennzeichnet, dass** ein Teil der abgetrennten Lösungsmitteldämpfe, die von der anderen verdampften Fraktion stammen, nach der Verdampfung der in Betracht stehenden Fraktion vor der Stufe (i), bei der die besagte andere Fraktion verdampft wird, teilweise rezykliert (recyclée) wird.

5. Verfahren nach einem der Ansprüche 1 bis 4, **dadurch gekennzeichnet, dass** zumindest eine der Fraktionen vor deren Verdampfung durch abgetrennte Lösungsmitteldämpfe, die von einer der anderen verdampften Fraktionen stammen, vorerhitzt wird.

6. Verfahren nach einem der Ansprüche 1 bis 5, **dadurch gekennzeichnet, dass** das Lösungsmittel rezykliert wird.

7. Verfahren nach einem der Ansprüche 1 bis 6, **dadurch gekennzeichnet, dass** das Chromatographietrennverfahren vom Typ Simulated Moving Bed oder simuliertes bewegliches Bett ist.

8. Verfahren nach einem der Ansprüche 1 bis 6, **dadurch gekennzeichnet, dass** das Chromatographietrennverfahren vom Typ VARICOL ist.

9. Chromatographie-Vorrichtung, welche zur Durchführung des Verfahrens nach einem der Ansprüche 1 bis 8 angepasst ist, aufweisend:
(i) eine zentrale Trenneinheit auf einem chromatographischen Bett,
(ii) zumindest zwei parallel verlaufende Leitungen für Fraktionen (1A, 1B),
(iii) zumindest zwei Verdampfer (2A, 2B), welche mit den Leitungen für Fraktionen verbunden sind,
(iv) Leitungen für Wärmeübertragungsflüssigkeit (3A, 3B), welche jeweils mit zumindest zwei Verdampfern (2A, 2B) in Verbindung stehen,
(v) Entnahmeleitungen (5A, 5B), welche nachgelagert zu den Verdampfern (2A, 2B) die verdampften Fraktionen zumindest teilweise in Form einer Mischung aus Flüssigkeit + Dampf auffangen,
(vi) Separationseinrichtungen (6A, 6B) zur Aufnahme des Lösungsmittels in einer Leitung (7A, 7B), welche mit den Entnahmeleitungen (5A, 5B) in Verbindung stehen,
**dadurch gekennzeichnet, dass** die Leitung (7A) mit der Leitung (3B) in der Eigenschaft als Leitung für Wärmeübertragungsflüssigkeit in Verbindung steht.

10. Vorrichtung nach Anspruch 9, **dadurch gekennzeichnet, dass** die Leitungen (1A) und (1B) jeweils mit den extrahierten und den raffinierten Fraktionen korrespondieren.

11. Vorrichtung nach Anspruch 9 oder 10, **dadurch gekennzeichnet, dass** sie zusätzlich einen Wärmetauscher (10) umfasst, welcher an der Leitung (1A) angeordnet ist, und der außerdem mit der Leitung (7B) in der Funktion als Wärmeübertragungsflüssigkeit in Verbindung steht.

12. Vorrichtung nach einem der Ansprüche 9 bis 11, **dadurch gekennzeichnet, dass** sie zusätzlich eine Leitung (4B) für Lösungsmittel und Wärmeübertragungsflüssigkeit aufweist, die den Verdampfer (2B) verlässt sowie eine Leitung (1BA) aufweist, welche die genannte Leitung (4B) mit der Leitung (1A), welche den Verdampfer (2A) speist, verbindet, um eine teilweise Rezyklierung zu erzielen.

13. Vorrichtung nach einem der Ansprüche 9 bis 12, **dadurch gekennzeichnet, dass** die Verdampfer Einfachverdampfer sind.

14. Vorrichtung nach einem der Ansprüche 9 bis 12, **dadurch gekennzeichnet, dass** die Verdampfer Mehrfachverdampfer sind.

15. Vorrichtung nach einem der Ansprüche 9 bis 14, **dadurch gekennzeichnet, dass** sie zusätzlich eine Rezyklierungseinrichtung für Lösungsmittel aufweist.

16. Vorrichtung nach einem der Ansprüche 9 bis 14, **dadurch gekennzeichnet, dass** die zentrale Trenneinheit auf einem chromatographischen Bett vom Typ Simulated Moving Bed oder simuliertes bewegliches Bett basiert.

17. Vorrichtung nach einem der Ansprüche 9 bis 14, **dadurch gekennzeichnet, dass** die zentrale Trenneinheit auf einem chromatographischen Bett vom Typ VARICOL basiert.

## Claims

1. Method for chromatographic separation producing at least two fractions, in which method:
(i) the solvent is at least partially evaporated from the said fractions produced,
(ii) the solvent vapours thus produced are separated,
**characterized in that** stage (i) of the method is carried out, for at least one of the said fractions, at least partially with the separated solvent vapours originating from one of the other evaporated fractions.

2. Method according to Claim 1, **characterized in that** two extract and raffinate fractions are evaporated.

3. Method according to Claim 1 or 2, **characterized in that** stage (i) is carried out, for a fraction under consideration, entirely with the separated solvent vapours originating from one of the other evaporated fractions.

4. Method according to one of Claims 1 to 3, **characterized in that** a portion of the separated solvent vapours originating from the other evaporated fraction is partially recycled, after evaporation of the fraction under consideration, to the upstream side of stage (i) for evaporation of the said other fraction.

5. Method according to one of Claims 1 to 4, **characterized in that** at least one of the fractions is preheated before evaporation with the separated solvent vapours originating from one of the other evaporated fractions.

6. Method according to one of Claims 1 to 5, **characterized in that** the solvent is recycled.

7. Method according to one of Claims 1 to 6, **characterized in that** the chromatographic separation is of the Simulated Moving Bed type.

8. Method according to one of Claims 1 to 6, **characterized in that** chromatographic separation is of the Varicol type.

9. Chromatography device for carrying out the method according to one of Claims 1 to 8, comprising:
(i) a central unit for separation on a chromatographic bed,
(ii) at least two lines of fractions (1A, 1B) deriving therefrom,
(iii) at least two evaporators (2A, 2B) connected to the said fraction lines,
(iv) heat-exchange fluid lines (3A, 3B) being connected to at least two evaporators (2A, 2B) respectively,
(v) withdrawal lines (5A, 5B) collecting, downstream of the said evaporators (2A, 2B), the at least partially evaporated fraction in the form of a liquid + vapour mixture,
(vi) separators (6A, 6B) connected to the said withdrawal lines (5A, 5B) to collect the solvent in a line (7A, 7B),
**characterized in that** the line (7A) is connected to the line (3B) as heat-exchange fluid line.

10. Device according to Claim 9, **characterized in that** the lines (1A) and (1B) correspond to extract and raffinate fractions, respectively.

11. Device according to Claim 9 or 10, **characterized in that** it additionally comprises a heat exchanger (10) positioned on the line (1A) and furthermore connected to the line (7B) as heat-exchange fluid.

12. Device according to one of Claims 9 to 11, **characterized in that** it additionally comprises a solvent and heat-exchange fluid line (4B) leaving the evaporator (2B) and a line (1BA) connecting the said line (4B) to the line (1A) feeding the evaporator (2A), for partial recycling.

13. Device according to one of Claims 9 to 12, **characterized in that** the evaporators are single-effect evaporators.

14. Device according to one of Claims 9 to 12, **characterized in that** the evaporators are multiple-effect evaporators.

15. Device according to one of Claims 9 to 14, **characterized in that** it additionally comprises a device for recycling the solvent.

16. Device according to one of Claims 9 to 14, **characterized in that** the central unit for separation on a chromatographic bed is of the Simulated Moving Bed type.

17. Device according to one of Claims 9 to 14, **characterized in that** the central unit for separation on a chromatographic bed is of the Varicol type.
